# EUROPEAN PATENT APPLICATION

(11) **EP 2 157 527 A1**
(43) Date of publication of application: **24.02.2010**
(21) Application number: 08757616.1
(22) Date of filing: 05.06.2008
(51) Int. Cl.: G06F 21/00, H04L 9/00

(54) **THE METHOD, DEVICE AND SYSTEM FOR FORWARDING THE LICENSE**

(30) Priority: 06.06.2007 CN 200710110638; 03.03.2008 CN 200810082409
(71) Applicant: Huawei Technologies Co., Ltd., Longgang District, Shenzhen Guangdong 518129 (CN)
(72) Inventor: ZHANG, Renzhou, Longgang District 518129 Shenzhen (CN); DANG, Pei, Longgang District 518129 Shenzhen (CN); ZHOU, Zhipeng, Longgang District 518129 Shenzhen (CN); CHEN, Dagang, Longgang District 518129 Shenzhen (CN); ZHOU, Haojun, Longgang District 518129 Shenzhen (CN); HUANG, Chen, Longgang District 518129 Shenzhen (CN); FENG, Wenjie, Longgang District 518129 Shenzhen (CN)
(74) Representative: Kreuz, Georg Maria
(86) International application number: PCT/CN2008/071205
(87) International publication number: WO 2008/148356

(57) **Abstract**

The present invention discloses a method for transferring licenses, a device for issuing licenses, and a communication system, and relates to the Digital Rights Management (DRM) technology. The method includes: the first issuing device receives a request of transferring a license issued by the second issuing device; the first issuing device transfers the license after determining that a relationship is set up with the second issuing device. The license issuing device includes: a receiving module, a setup module, a determining module, and a sending module. The communication system includes: a first issuing device, a second issuing device, and a device requesting to transfer a license. Through the present invention, an issuing device may transfer the licenses issued by other issuing devices, thus improving the flexibility of transferring the licenses.

## Description

### FIELD OF THE INVENTION

The present invention relates to the Digital Rights Management (DRM) technology, and in particular, to a method, device and system for transferring license.

### BACKGROUND

Digital Rights Management (DRM) controls use of digital contents through a rights constraint and content protection solution to protect the legal rights of the content owner. A Content Issuer (CI) encrypts the digital contents, and the consumer downloads the encrypted digital content packets to a terminal device. A Rights Issuer (RI) is responsible for distributing the licenses corresponding to the digital contents. A license includes a Content Encryption Key (CEK) and the corresponding rights. The consumer of a device cannot use the purchased digital contents normally until he/she holds both the content packet and the license. The DRM agent uses the public key of the device to decrypt and obtains the Rights Encryption Key (REK), and further obtains the CEK in the license for the purpose of decrypting the digital contents; and then controls use of the digital contents according to the rights information in the license.

Taking the Open Mobile Alliance (OMA) DRM standard as an example, a license is represented by a Rights Object (RO). An RO includes the information such as permissions, constraints, a key, and a signature.

The permissions and constraints in a license are collectively called "rights". Rights or the carrier of rights is called "license ".

Depending on the constraints included in the RO, ROs are categorized into stateful ROs and stateless ROs. A stateful RO includes state constraint information such as count and time (including time range, accumulated time); a stateless RO does not include state constraint information. For example, if an RO includes a permission of printing and a constraint of print count, this RO is a stateful RO; if an RO includes the permission of printing and browsing and imposes no state constraint on any permission in the RO, the RO is a stateless RO. The permissions included in a stateless RO are non-consuming permissions, namely, use of such permission does not affect subsequent use.

In the OMA Secure Removal Media (SRM) standard, each stateful RO corresponds to an Extended State Format (ESF) for recording its current consumption state.

In the OMA DRM 2.0 standard, an RO includes a CEK and an REK. The REK is used for encrypting the CEK. With the CEK, the encrypted digital contents may be decrypted.

In the OMA DRM 2.0 standard, the device needs to perform security authentication (for example, integrity authentication) for the RO before installing the RO. ROs are categorized into domain ROs and device ROs. For a domain RO, the RI needs to perform digital signature for the <rights> part. Before installing the domain RO, the device needs to further authenticate the digital signature for the <rights>. Before authenticating the RO, the device must obtain the relevant authentication key. For example, after obtaining the public key of the RI, the device authenticates the digital signature created by the RI.

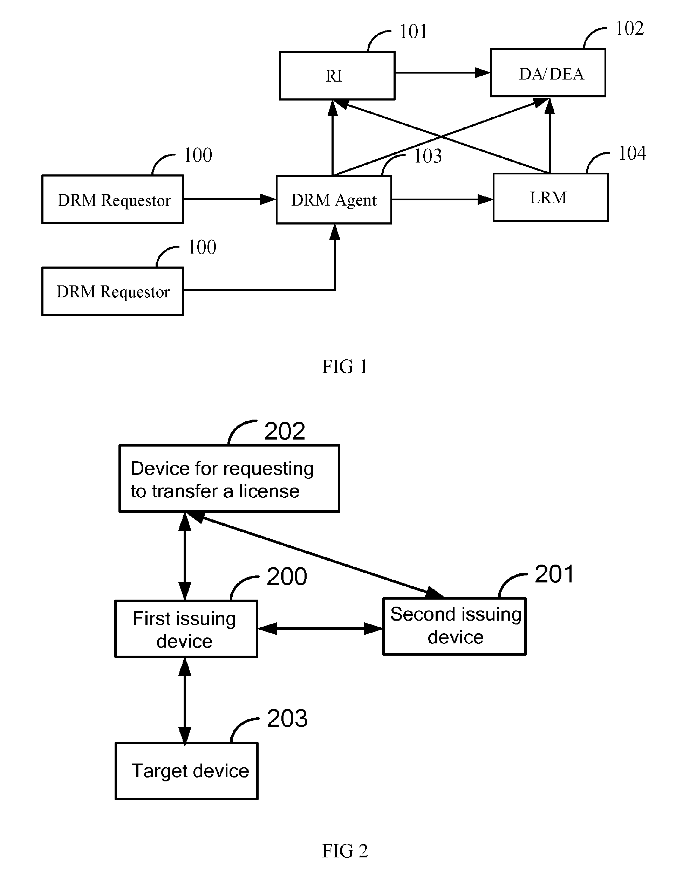

The OMA DRM2.1 standard provides a process for one terminal to transfer the RO issued by a RI to another terminal through the RI, namely, puts forward a service model of transferring an RO through an RI. However, in the prior art, the RO can be transferred only by the RI which issues the RO rather than by other devices. In many scenarios, a transfer device is required to transfer the RO issued by other devices, and such a requirement is not fulfilled by the prior art. For example, as shown in Figure 1, the system architecture of the underway OMA SCE standard includes: DRM requestor 100, RI 101, Domain Authority / Domain Enforcement Agent (DA/DEA)102, DRM agent 103, and Local Rights Manager (LRM) 104. The LRM 104 is adapted to import the protected contents or license rights from a non-OMA DRM system to the OMA DRM system. The RI 101 is adapted to generate an RO, including the RO generated for the LRM agent. The DA/DEA 102 is responsible for user domain management, including permitting the RI, DRM agent, and LRM to join the user domain. Moreover, the LRM is also adapted to issue ROs. Multiple RO issuing devices such as RI and LRM may be deployed in a system. One possibility is that the terminal needs to transfer the RO issued by the LRM via RI to another terminal.

On the other hand, in the process of transferring the RO through a transfer device, the transfer process may be manipulated by illegal devices and become an approach to disseminating ROs if the transfer device does not authenticate the RO being transferred. However, the prior art cannot meet the requirement of authenticating the RO in the process of transferring the RO.

### SUMMARY

According to the present invention a method, device and system are provided for transferring license to enable one issuing device to transfer the license issued by another issuing device. Correspondingly, the flexibility of transferring licenses is improved.

In a preferred implementation form the method for transferring licenses includes:
receiving, by a first issuing device, a request of transferring a license issued by a second issuing device; and
transferring, by the first issuing device, the license after determining that a relationship is set up with the second issuing device.

In a preferred implementation form the issuing device includes:
a receiving module, adapted to receive a request of transferring the license issued by another issuing device;
a setup module, adapted to set up a relationship with the other issuing device;
a determining module, adapted to: determine whether this issuing device has set up a relationship with the other issuing device according to the request, and, if no relationship is set up, control the setup module to set up the relationship with the other issuing device; and
a sending module, adapted to transfer the license after this issuing device has set up the relationship with the other issuing device.

A communication system provided in an embodiment of present invention includes:
a first issuing device and a second issuing device, adapted to issue and transfer licenses; and
a device requesting to transfer an license, adapted to request the first issuing device to transfer the license issued by the second issuing device, where the first issuing device transfers the license after determining that a relationship is set up with the second issuing device.

In implementation forms of the present invention, the first issuing device receives a request of transferring a license issued by the second issuing device; the first issuing device transfers the license after determining that a relationship is set up with the second issuing device. Therefore, one issuing device may transfer the license issued by other issuing devices, and the flexibility of transferring licenses is improved greatly.

### BRIEF DESCRIPTION OF THE DRAWINGS

Figure 1 shows a system structure of the OMA SCE standard in the prior art;
Figure 2 shows a structure of a communication system in an embodiment of the present invention;
Figures 3, 4, 5 and 6 show structures of the first issuing device in an embodiment of the present invention;
Figure 7 shows a process of transferring license in an embodiment of the present invention;
Figure 8 shows a process in which the first issuing device sets up a relationship with the second issuing device and transfers the license provided by the requesting device before receiving the request from the requesting device in an embodiment of the present invention.
Figure 9 shows a process in which the first issuing device triggers setup of a relationship between the first issuing device and the second issuing device in an embodiment of the present invention;
Figure 10 shows a process in which the requesting device triggers setup of a relationship between the first issuing device and the second issuing device in an embodiment of the present invention;
Figure 11 shows an instance for the requesting device to trigger setup of a relationship between the first issuing device and the second issuing device in an embodiment of the present invention;
Figure 12 shows a process in which the requesting device triggers setup of a relationship between the first issuing device and the second issuing device by sending a request of transferring license to the first issuing device in an embodiment of the present invention;
Figure 13 shows an interaction process between the requesting device and the first issuing device in an embodiment of the present invention;
Figure 14 shows an instance of transferring license in an embodiment of the present invention;
Figure 15 shows a process in which the first issuing device transfers license to a target device through a home device of the target device in an embodiment of the present invention; and
Figure 16 is a flowchart of verifying a matching relation in an embodiment of the present invention.

### DETAILED DESCRIPTION

In the embodiments of the present invention, the first issuing device receives a request of transferring a license issued by a second issuing device; the first issuing device transfers the license after determining that a relationship (such as a trust relation) is set up with the second issuing device. Therefore, one issuing device may transfer a license issued by other issuing devices, and the flexibility of transferring licenses is improved greatly.

As shown in Figure 2, the communication system in an embodiment of the present invention includes: a first issuing device 200, a second issuing device 201, and a device 202 for requesting to transfer a license. The first issuing device 200 and the second issuing device 201 are adapted to issue and transfer licenses. The device 202 for requesting to transfer a license is adapted to request the first issuing device 200 to transfer the license issued by the second issuing device 201. The first issuing device 200 transfers the license after setting up a relationship with the second issuing device 201. Figure 2 further includes a target device 203, adapted to receive the license transferred by the first issuing device 200.

The first issuing device 200 and the second issuing device 201 may be an RI or importing device. The first issuing device 200 is different from the second issuing device 201. The device 202 for requesting to transfer a license and the target device 203 may be a terminal device or a license issuing device. For example, the device 202 for requesting to transfer a license is the second issuing device 201, namely, the second issuing device 201 requests the first issuing device 200 to transfer the license issued by the second issuing device 201 to the target device 203. The device 202 for requesting to transfer a license may be different from or the same as the target device 203. For example, if the target device is not determined at the time of requesting, or if the operation of transferring the license to the target device fails, the device 202 for requesting to transfer the license may request to take back the license. For ease of description, the device for requesting to transfer a license is hereinafter referred to as a "requesting device".

In the communication system in an embodiment of the present invention, the first issuing device receives a request of transferring a license issued by the second issuing device; the first issuing device transfers the license after determining that a relationship is set up with the second issuing device. Therefore, one issuing device may transfer a license issued by other issuing devices, the flexibility of transferring licenses is improved greatly, and favorable consumption experience is brought to consumers. Further, in the case of transferring a license, a process of encapsulating and authenticating the license is introduced. Therefore, illegal transfer and dissemination of licenses are prevented, and the interest of the license consumer and license issuer is protected.

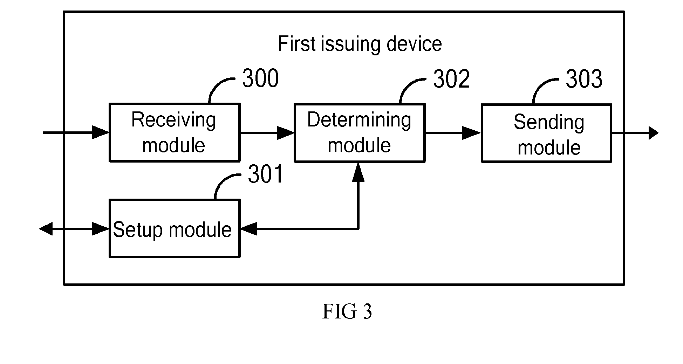

In an embodiment, as shown in Figure 3, the structure of a first issuing device 200 includes a receiving module 300, a setup module 301 , a determining module 302 and a sending module 303:
the receiving module 300, adapted to receive, from a requesting device, a request of transferring a license issued by the second issuing device 201;
the setup module 301, adapted to set up a relationship with the second issuing device 201;
the determining module 302, adapted to: determine whether the first issuing device has set up a relationship with the second issuing device 201 according to the received request of transferring the license, and, if no relationship is set up, control the setup module 301 to set up the relationship with the second issuing device 201; and
the sending module 303, adapted to transfer the license after the first issuing device has set up the relationship with the second issuing device 201.

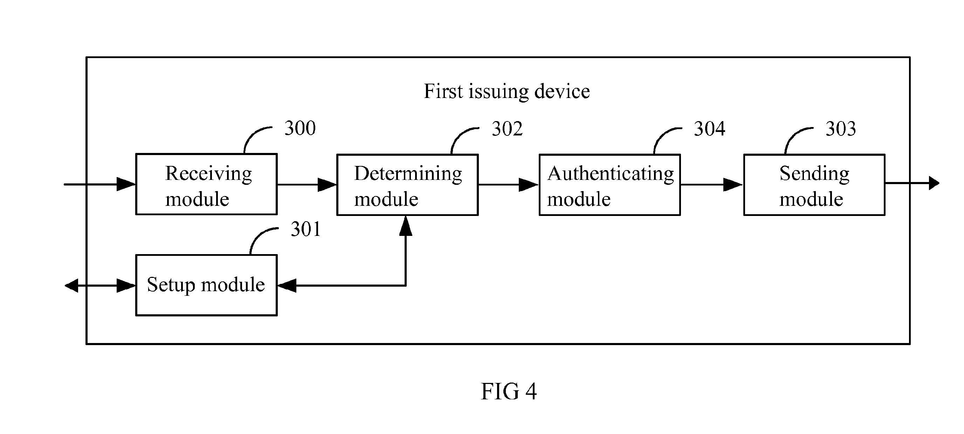

As shown in Figure 4, in an embodiment of the present invention, the first issuing device 200 in Figure 3 may further include an authenticating module 304, adapted to authenticate the digital signature in the license after receiving the license.

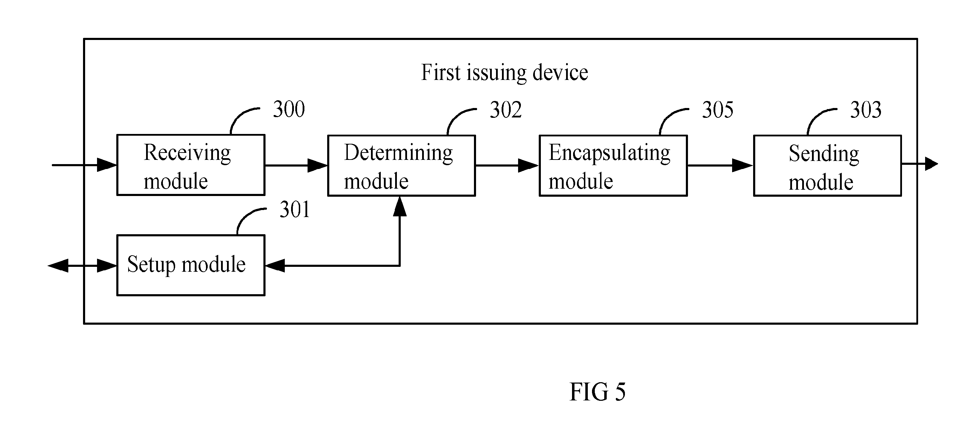

As shown in Figure 5, in an embodiment of the present invention, the first issuing device 200 in Figure 3 may further include an encapsulating module 305, adapted to re-encapsulate the license before transferring the license.

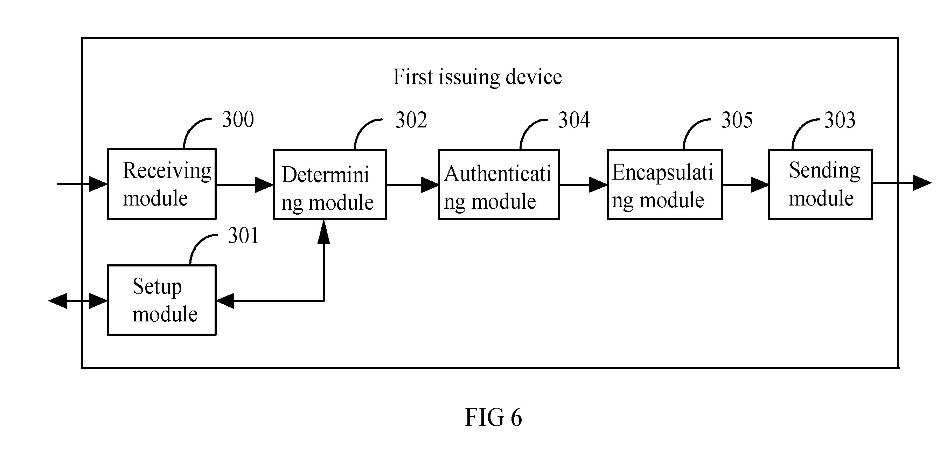

As shown in Figure 6, in an embodiment of the present invention, the first issuing device 200 in Figure 4 may further include an encapsulating module 305, adapted to re-encapsulate the license before transferring the license.

The first issuing device in embodiments of the present invention receives a request of transferring a license issued by the second issuing device, and transfers the license after determining that a relationship is set up with the second issuing device. Therefore, the first issuing device may transfer the license issued by other issuing devices, the flexibility of transferring licenses is improved greatly, and favorable consumption experience is brought to consumers. Further, in the case of transferring a license, a process of encapsulating and authenticating the license is introduced. Therefore, illegal transfer and dissemination of licenses are prevented, and the interest of the license consumer and license issuer is protected.

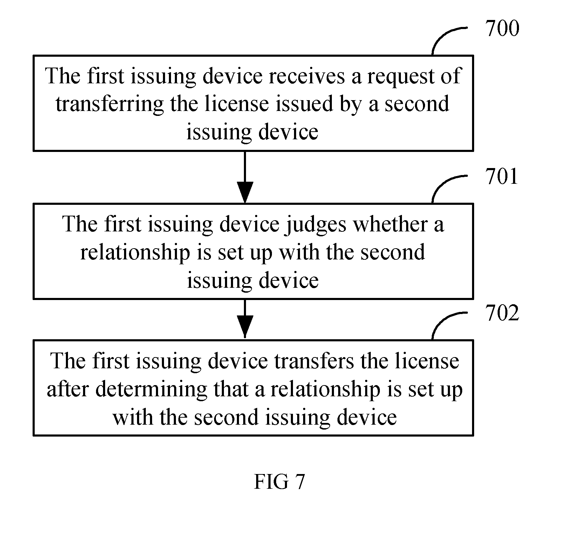

As shown in Figure 7, a process of transferring a license in an embodiment of the present invention includes:
Step 700: The first issuing device receives, from a requesting device, a request of transferring a license issued by the second issuing device.
Step 701: The first issuing device determines whether a relationship is set up with the second issuing device.
Step 702: The first issuing device transfers the license provided by the requesting device after determining that a relationship is set up with the second issuing device.

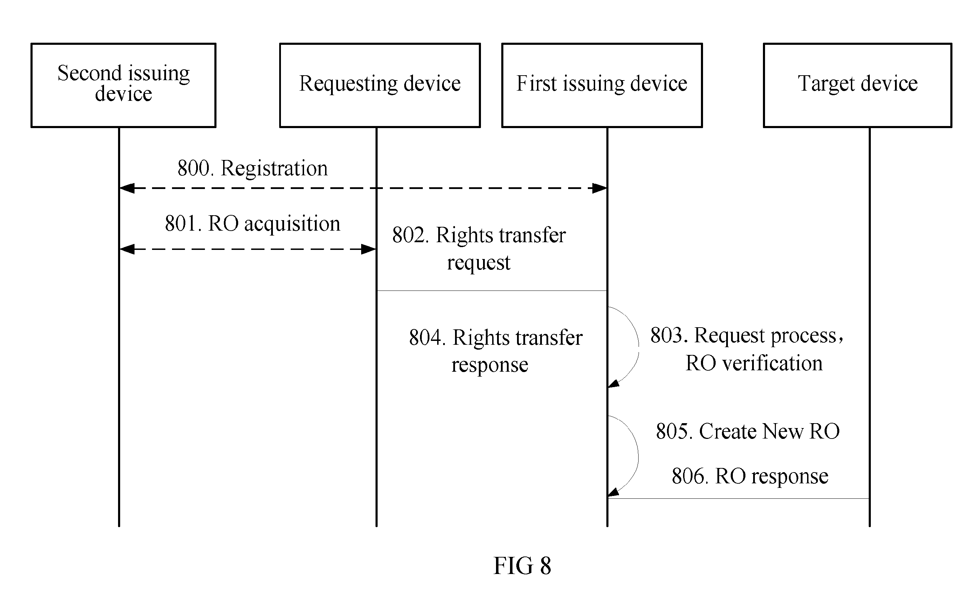

The first issuing device may set up a relationship with the second issuing device before or after receiving the request from the requesting device. Figure 8 shows a process in which the first issuing device sets up a relationship with the second issuing device and transfers the license provided by the requesting device before receiving a request from the requesting device in an embodiment of the present invention. The process includes:
Step 800: The first issuing device sets up a relationship with the second issuing device, for example, through a registration protocol. After a relationship is set up, the first issuing device supports transferring licenses issued by the second issuing device; or the first issuing device and the second issuing device support transferring licenses issued by the opposite party. After a relationship is set up between the both devices, the first issuing device and/or the second issuing device may record the device identifier information, validity period, device certificate, device public key of the opposite party, or any combination thereof.
Step 801: The requesting device obtains the license issued by the second issuing device.
Step 802: The requesting device sends to the first issuing device a request of transferring the license issued by the second issuing device.

The first issuing device needs to obtain the license to be transferred. Therefore, through the request, the requesting device may provide the first issuing device with the license and the REK or CEK corresponding to the license. For example, the request carries the information such as the license. If the license is stateful, the request further carries the state information of the license. Nevertheless, the requesting device may provide the first issuing device with the license information, license state information and REK and CEK through other messages (for example, a newly added message). Moreover, the first issuing device may also obtain the information such as the license from the second issuing device.

Step 803: After receiving the request, the first issuing device processes the request, for example, authenticates and resolves the request. Optionally, the first issuing device may authenticate whether the license is legal or correct, for example, authenticate the digital signature for the <rights> information in the license; and the first issuing device may also authenticate whether the license is issued by the issuing device which has set up a relationship with the first issuing device. Nevertheless, the first issuing device may also authenticate the integrity of the license.

The license may carry information about multiple transferring. For example, the license is transferred many times, and the current license carries the information about multiple issuing devices which transfer the license, for example, carries the digital signature added by the issuing device which transfers the license. When authenticating the request sent by the requesting device, the first issuing device needs to authenticate the information about the issuing devices which transfer the license. When the information about one of such issuing devices is authenticated unsuccessfully, the first issuing device may reject the request of transferring the license. Nevertheless, in such a case, the first issuing device needs to set up relationships with all the issuing devices which transfer the license respectively.

Step 804: The first issuing device returns a response to the requesting device. The response carries the state information about success or failure of the authentication. If the first issuing device is unable to transfer the license to the target device after receiving the request, for example, if the request is authenticated unsuccessfully, the first issuing device may return the information about the license to the requesting device. For example, the first issuing device may notify the requesting device to obtain the information about the license.

Steps 805-806: If the authentication succeeds, the first issuing device transfers to the target device the license provided by the requesting device. The first issuing device re-encapsulates the license and then transfers it to the target device, for example, extracts the CEK and the <rights> information in the license and then re-encapsulates them. Nevertheless, for a stateful license, when the requesting device provides the license for the first issuing device, the requesting device also provides the state information of the license. Therefore, the first issuing device may re-encapsulate the license according to the license and its state information. In another example, the first issuing device may transfer the license (also the state information of the license if the license is stateful,) to the target device directly.

In the process shown in Figure 8, the requesting device may obtain the license issued by the second issuing device directly, or obtain the license issued by the second issuing device through transfer from other issuing devices. A license may be transferred many times. The second issuing device may be a transfer device in the latest transfer process, or a transfer device in the previous transfer process, or an initial issuing device of the license.

In step 800, the setup of the relationship between the first issuing device and the second issuing device may be triggered by the first issuing device, the second issuing device, or the requesting device.

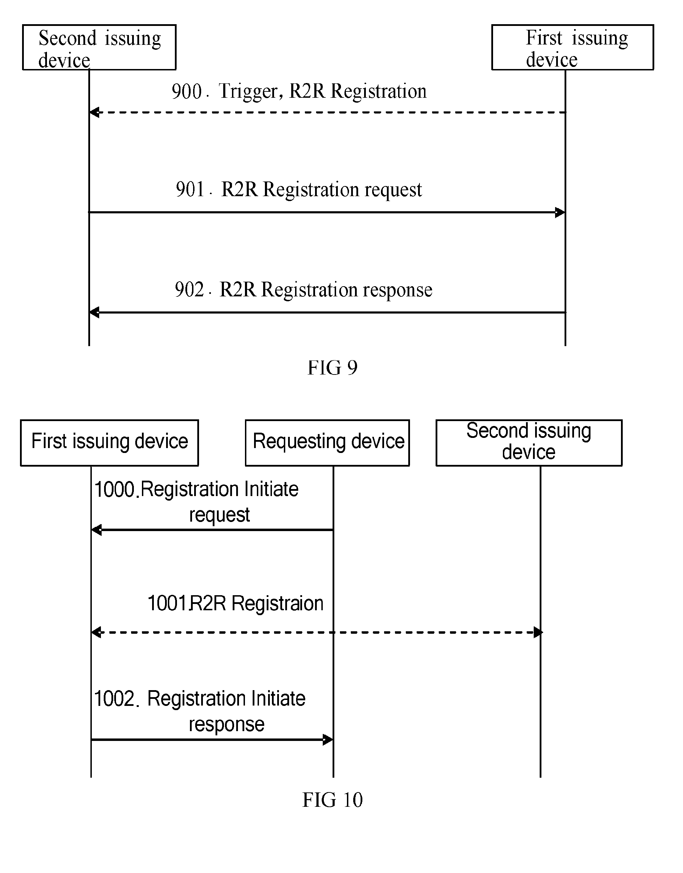

Figure 9 shows a process in which the first issuing device triggers the setup of the relationship between the first issuing device and the second issuing device in an embodiment of the present invention. (The process in which the second issuing device triggers the setup of the relationship is similar.) The process includes the following steps:
Step 900: The first issuing device sends a trigger message to the second issuing device to trigger the setup of a relationship between the first issuing device and the second issuing device.
Step 901: After receiving the trigger message, the second issuing device requests the first issuing device to set up a relationship, for example, by sending an R2R registration request which may carry the device identifiers of both parties. Table 1 shows an instance defined by the parameters carried in the R2R registration request:

**Table 1 R2R registration request**

| Parameters | Description |
|---|---|
| Device0 ID | ID of the first issuing device |
| Device1 ID | ID of the second issuing device |
| Expired Time | Validity period |
| CertificateChain/PubKey | Certificate chain or public key of the second issuing device |

Step 902: After receiving the R2R registration request, the first issuing device verifies whether the R2R registration request is acceptable. If the R2R registration request is acceptable, transferring licenses issued by the second issuing device is supported subsequently. The first issuing device returns an R2R registration response to the second issuing device. Table 2 shows an instance defined by the parameters carried in the R2R registration response:

**Table 2 R2R registration response**

| Parameters | Description |
|---|---|
| status | Response status: success or rejection reasons |
| CertificateChain/PubKey | Certificate chain or public key of the first issuing device |

Figure 10 shows a process in which the requesting device triggers the setup of a relationship between the first issuing device and the second issuing device in an embodiment of the present invention. The process includes the following steps:
Step 1000: The requesting device sends a Registration Initiate request to the first issuing device to trigger the setup of a relationship between the first issuing device and the second issuing device. The requesting device may add the ID of the second issuing device into the Registration Initiate request. Subsequently, the first issuing device may set up a relationship with the second issuing device according to the ID of the second issuing device. The process in which the requesting device sends a Registration Initiate request to the second issuing device to trigger the setup of a relationship is similar. In this case, the requesting device adds the ID of the first issuing device into the Registration Initiate request, and the second issuing device sets up a relationship with the first issuing device according to the ID of the first issuing device. Table 3 shows an instance defined by the parameters in the Registration Initiate request:

**Table 3 Registration Initiate request**

| Parameters | Description |
|---|---|
| Device ID | ID of the requesting device |
| Device2 ID | ID of the first issuing device |
| Device3 ID[O] | ID of the second issuing device, optional |

Step 1001: After receiving the Registration Initiate request, the first issuing device verifies whether the Registration Initiate request is acceptable. If the Registration Initiate request is acceptable, the first issuing device sets up a relationship with the second issuing device. For example, the first issuing device sets up a relationship with the second issuing device according to the ID of the second issuing device carried in the Registration Initiate request. When the Registration Initiate request carries the ID of the second issuing device, if the first issuing device compares the ID of the second issuing device with the locally record about issuing devices which have currently set up a relationship, and determines that a relationship has been set up with the second issuing device according to the comparison result, there is no need to set up a relationship again.
Step 1002: The first issuing device returns a Registration Initiate response to the requesting device. Table 4 shows an instance defined by the parameters in the Registration Initiate response:

**Table 4 Registration Initiate response**

| Parameters | Description |
|---|---|
| status | Response status; "success", or failure reasons |
| Device IDs[O] | ID of the issuing device which sets up a relationship with the first issuing device, optional |

If the Registration Initiate request does not carry the ID of the second issuing device, the Registration Initiate response carries the ID(s) of one or more issuing devices which set up relationships with the first issuing device.

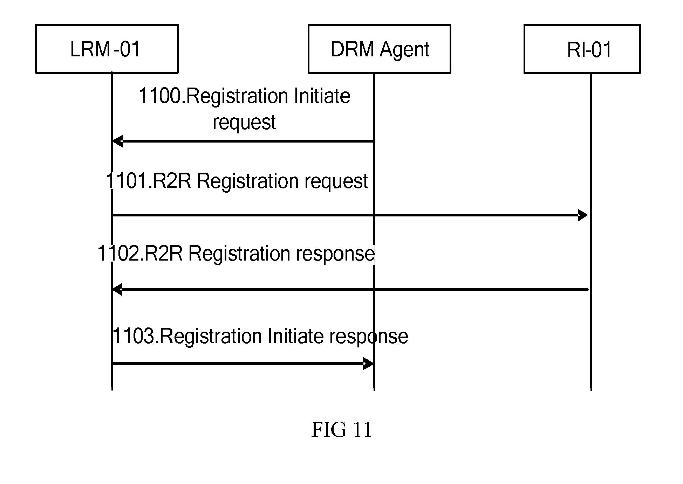

Figure 11 shows an instance (supposing that the terminal device DRM Agent0 requests the importing device DRM-0 to set up a relationship with the RI,-01):
Step 1100: The DRM Agent0 sends a Registration Initiate request to the LRM-01 to trigger the setup of a relationship between the LRM-01 and RI,-01. Table 5 shows an instance defined by the parameters in the Registration Initiate request:

**Table 5 Registration Initiate request**

| Parameters | Description |
|---|---|
| DRM Agent0 | ID of the requesting device |
| LRM-01 | ID of the issuing device of the license |
| RI-01 | ID of the transfer device of the license |

Step 1101: The LRM-01 requests the RI-01 to set up a relationship, for example, by sending an R2R Registration request.
Step 1102: The RI-01 returns an R2R registration response about setup of a relationship to the DRM-01.
Step 1103: The LRM-01 returns a Registration Initiate response to the DRM Agent0. If the R2R registration response received by the LRM-01 from the RI-01 carries the status information about registration failure, the Registration Initiate response returned by the LRM-01 to the DRM Agent0 carries failure status information.

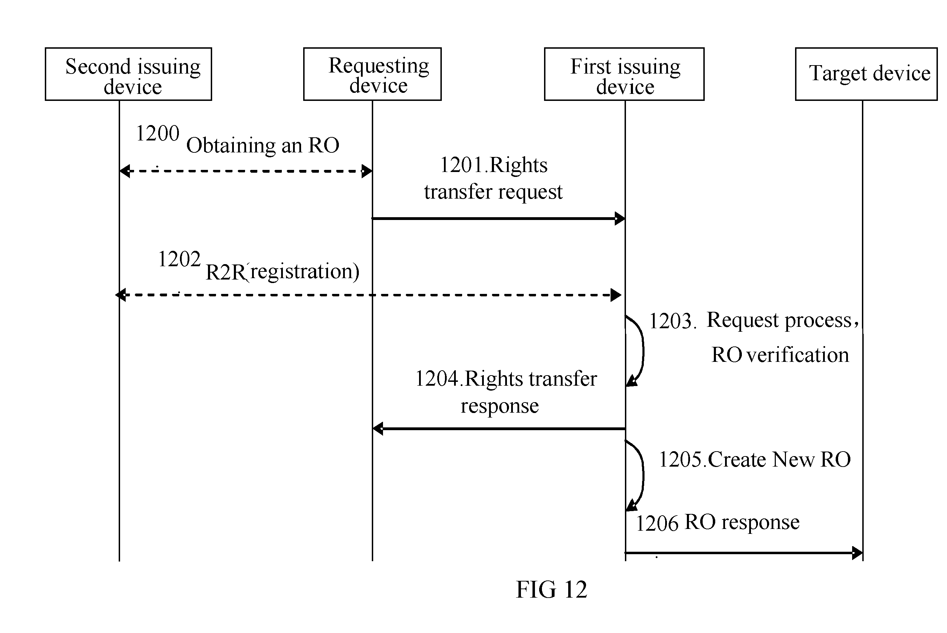

The rights transfer request sent by the requesting device to the first issuing device may also trigger the setup of a relationship between the first issuing device and the second issuing device. The process is shown in Figure 12, where steps 1200-1206 are similar to the counterpart steps in Figure 8 and Figure 10. In step 1201 in Figure 12, the first issuing device may verify whether a relationship has been set up with the second issuing device first after receiving a rights transfer request from the requesting device. An example of the verification method is to compare the ID of the second issuing device carried in the request with the locally record about the issuing devices which have currently set up a relationship, and verify whether a relationship has been set up with the second issuing device according to the comparison result. If no relationship has been set up with the second issuing device yet, the process of setting up a relationship with the second issuing device is performed.

The second issuing device may add the ID (such as the device ID or device URL) of the first issuing device into the license. Subsequently, the requesting device may send a rights transfer request to the first issuing device according to the ID of the first issuing device carried in the license. Nevertheless, the license sent by the second issuing device may carry IDs of multiple issuing devices which have set up relationships with the second issuing device.

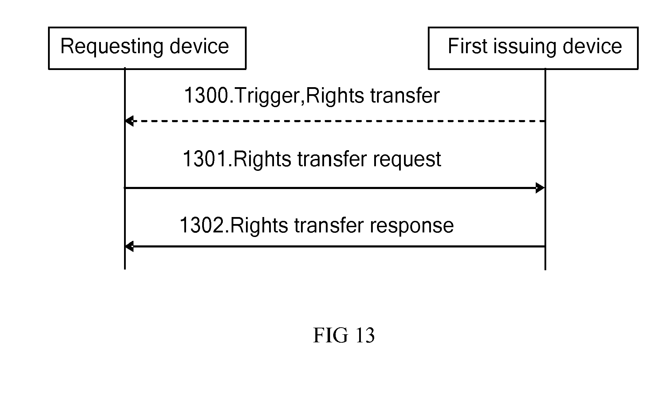

Figure 13 shows an interaction process between the requesting device and the first issuing device in an embodiment of the present invention. The process includes the following steps:
Step 1300: The first issuing device triggers the requesting device to request transfer of a license.
Step 1301: The requesting device requests the first issuing device to transfer the license issued by the second issuing device, wherein the request of transferring the license may carry the license requested to be transferred and the REK corresponding to the license, and, if the license is stateful, may further carry the state information of the license. Table 6 shows an instance defined by the parameters in the rights transfer request:

**Table 6 Rights transfer request**

| Parameters | Description |
|---|---|
| Device ID | ID of the requesting device |
| Carrier ID | ID of the first issuing device |
| Target Device ID | ID of the target device that transfers the license |
| RO | transferred license |
| ESF | the ESF carries the state information of the transferred license if it is a stateful license |
| REK or CEK | licenses encryption key or content encryption key |
| ISSUER ID | ID of the second issuing device |
| RO ID | license identifier |

The REK, CEK and ESF may be precluded from being carried in the request and transferred to the first issuing device together with the license, and may be transferred by the requesting device to the first issuing device through other messages after the first issuing device finishes authentication of the digital signature for the license. If the REK is carried in the request, the first issuing device may decrypt out the CEK encapsulated in the license according to the REK. If the CEK is carried in the request, the first issuing device does not need to decrypt the CEK in the license, but may encapsulate the CEK in the request into the license to be transferred to the target device.

The first issuing may extract the ID of the second issuing device according to the ID of the license, and authenticate the legal source of the license according to the public key of the second issuing device. Optionally, the requesting device adds the ID of the second issuing device into the request, and the first issuing device searches for the public key of the second issuing device and authenticates the legal source of the license, thus avoiding the trouble of resolving out the ID of the second issuing device from the license, and improving the processing efficiency.

If the request interaction is implemented through a security channel, the request may carry the plain text of the REK or CEK directly; otherwise, the REK or CEK may be encrypted and transferred to the first issuing device. For example, the REK or CEK is encrypted by means of the public key of the first issuing device, and the rights transfer request carries the encrypted text; after receiving the rights transfer request, the first issuing device decrypts out the plain text of the REK or CEK by means of the private key of the first issuing device.

In an embodiment of the present invention, the requesting device does not add the license into the rights transfer request, and subsequently, the first issuing device obtains the license from the second issuing device according to the RO ID.

In this embodiment, the device ID may be a device identifier, address, or name.

After receiving the request, the first issuing device verifies whether the request is acceptable. If the request is acceptable, the first issuing device transfers the license provided by the requesting device to the target device subsequently. If the request is not acceptable, the first issuing device may discard the received license.

Step 1302: The first issuing device returns a rights transfer response to the requesting device. Table 7 shows an instance defined by the parameters carried in the rights transfer response:

**Table 7 Rights transfer response**

| Parameters | Description |
|---|---|
| status | Response status, success or failure reasons |

After the requesting device receives the response or sends a rights transfer request to the first issuing device, the local corresponding license and the state information of the license may be deleted.

The domain license received by the first issuing device may carry the digital signature of the second issuing device, for example, the digital signature for the <rights> part. Nevertheless, in order to verify the device license, the device license received by the first issuing device may also carry the digital signature of the second issuing device, for example, the digital signature for the <rights> part in the device license.

After receiving the license, the first issuing device authenticates the digital signature in the license. After the license is transferred by multiple issuing devices, the license may include multiple digital signatures. If any of such digital signatures is authenticated unsuccessfully, the first issuing device rejects the rights transfer request of the requesting device.

After the first issuing device authenticates the digital signature successfully, the digital signature of the first issuing device is added into the license. In this case, the first issuing device may discard the digital signature of the original license. Alternatively, the first issuing device reserves all the digital signatures in the original license and adds the digital signature of the first issuing device. Nevertheless, the first issuing device may reserve only the digital signature of the second issuing device in the original license and add the digital signature of the first issuing device, and discard the digital signature of other issuing devices, which is more simple and practicable than the practice of reserving all digital signatures in the original license. The second issuing device may be a transfer device in the latest transfer process, or a transfer device in the previous transfer process, or an initial issuing device of the license.

The rights transfer request sent by the requesting device may include the ID of the target device. The first issuing device may transfer the license to the target device according to the ID of the target device in the request after determining that a relationship has been set up with the second issuing device.

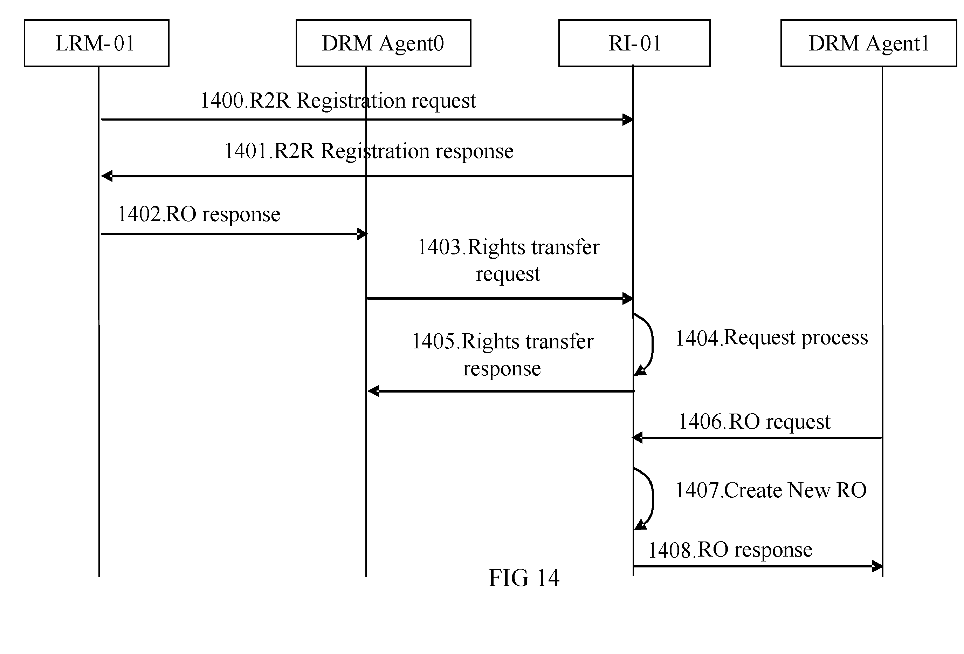

Figure 14 shows an instance of transferring a license in an embodiment of the present invention, as described below:
Assumption: A relationship is set up between an LRM (whose identifier is Lem-01) and an RI (whose identifier is RI-01) through a registration protocol, and the relevant information interaction is performed between them to support transferring licenses issued by the opposite party (the RI may transfer the RO issued by the LRM; the LRM may transfer the RO issued by the RI); the DRM Agent0 obtains an RO (RO-01) with the rights of playing five times from the LRM-01 through the 1-pass Rights Object Acquisition protocol in the prior art; afterward, the DRM Agent0 consumes the rights of two times of playing in the RO-01, and the remaining rights need to be transferred to the DRM Agent 1 through RI-01; and the RI-01 transfers the RO to be transferred to the target DRM Agent1 through the 2-pass Rights Object Acquisition Protocol in the prior art.

Step 1400: The LRM-01 sends an R2R Registration request to the RI-01. Table 8 shows an instance defined by the parameters carried in the R2R Registration request:

**Table 8 R2R Registration request**

| Parameters | Description |
|---|---|
| LRM-01 | LRM identifier |
| RI-01 | RI identifier |

Step 1401: After receiving the request of transferring RO from the LRM-01, the RI-01 authenticates the request and accepts it, and returns an R2R Registration response to the DRM-01. Table 9 shows an instance defined by the parameters carried in the R2R Registration response:

**Table 9 R2R Registration response**

| Parameters | Description |
|---|---|
| success | Response status information, "success" |

Step 1402: The DRM Agent0 obtains an RO (RO-01) from the LRM-01 and installs it. Given below is partial description of the RO-01:

```
<carrierID>
                    RI-01 //The specified transfer device is RI-01
                 </ carrierID >

                 <rights o-ex:id="RELl ">
                   //rights information in RO-01
                   <o-ex:context>
                      <o-dd:version>2.x</o-dd:version>
                      <o-dd:uid>RightsObjectID</o-dd:uid>
                   </o-ex:context>
                   <o-ex:agreement>
                      ....//omitted here
                      <o-ex:permission>
                          <o-dd:play>
                             <o-ex: constraint>
                                  <count>5</count>
                             </o-ex: constraint>
                          </o-dd:play>
                      </o-ex:permission>
                   </o-ex: agreement>
                 </rights>

                 <signature>
                    ....//omitted here

                   <ds: SigningDeviceID>
                         LRM-01 //device that performs digital signature
                    </ds: SigningDeviceID>

       <ds: SignatureValue>j 61wx3rvEPOOvKtMup4NbeVuBnk=</ds: SignatureValue>
                    ....//omitted here
                 </signature>
            Its ESF snippet is as follows:
                      <o-ex:permission>
                         <o-dd:play>
                             <o-ex: constraint>
                                  <count>3</count>// The rights of 3 times of use are currently
       available
                             </o-ex: constraint>
                        </o-dd:play>
                      </o-ex:permission>
```

Step 1403: According to the transfer device ID in the RO, the DRM Agent0 sends a Rights transfer request to the RI-01, requesting the RI-01 to transfer the RO-01 rights to the DRM Agent 1. Table 10 shows an instance defined by the parameters carried in the Rights transfer request. The DRM Agent0 performs digital signature for the request.

**Table 10 Rights transfer request**

| Parameters | Description |
|---|---|
| DRM Agent0 | ID of the requesting device |
| RI-01 | ID of the transfer device |
| DRM Agent1 | ID of the device that receives the transferred RO |
| RO-01 | Transferred RO |
| ESF | ESF to the RO-01 |
| LRM -01 | ID of the device that issues RO-01 |
| REK | license encryption key |

Step 1404: After receiving the Rights transfer request, the RI-01 authenticates the legality and integrity of the request first, including:
checking whether the requesting device ID and the RI-01 ID match the parameters in the request; and
checking whether the digital signature of the request is correct.

If the authentication succeeds, the RI-01 further authenticates the legality of the RO. First, the RI checks whether the transfer device ID encapsulated in the RO matches the RI ID, uses the public key of the LRM-01 to check whether the digital signature of the <rights> part in the RO is correct, and then resolves out the CEK encapsulated in the RO according to the REK.

Step 1405: If the request and RO are authenticated successfully, the RI-01 returns a Rights transfer response carrying "success" status information to the DRM Agent0 .

Step 1406: The DRM Agent sends an RO request to the RI-01, requesting to obtain an RO-01.

Step 1407: The RI-01 uses its private key to perform digital signature for the <rights> part, encapsulates digital signature into the RO, and discards the digital signature of the LRM-01 in the original RO; and re-encapsulates the RO (re-calculates the MAC value of the RO and encapsulates the MAC value into the RO). In the process of re-encapsulating the RO, the RI-01 encapsulates the state information of the current RO into the rights information of the RO. Therefore, the RO transferred to the target device carries the rights currently available to the target device. The re-encapsulated RO is partially described below:

```
                 <carrierID>
                    RI-01 // The specified transfer device is RI-01
                 </ carrierID >

                 <rights o-ex:id="RELl ">
                   //rights information in RO-01
                   <o-ex:context>
                      <o-dd:version>2.x</o-dd:version>
                      <o-dd:uid>RightsObjectID</o-dd:uid>
                   </o-ex:context>
                   <o-ex:agreement>
                      ....//omitted here
                      <o-ex:permission>
                         <o-dd:play>
                             <o-ex: constraint>
                                  <count>3</count>
                             </o-ex: constraint>
                        </o-dd:play>
                      </o-ex:permission>
                   </o-ex: agreement>
                 </rights>

              <signature>// digital signature created by RI-01
                    ....//omitted here
                   <ds: SigningDeviceID>
                         RI-01 // ID of the device that creates the digital signature
                    </ds: SigningDeviceID>
                   <ds:SignatureValue>125DGEhifdd5893df4grs23se5d =</ds:SignatureValue>
                    ....//omitted here
             </signature>
```

Step 1408: The RI-01 returns an RO response to the DRM Agent1. If the RI-01 accepts the request of the DRM Agent1, the returned RO response carries the re-encapsulated RO.

In another embodiment, after determining that a relationship has been set up with the second issuing device, the first issuing device further determines whether the first issuing device is a home server to the target device. If yes, the first issuing device transfers the license to the target device directly; otherwise, the first issuing device transfers the license to the home server of the target device, and the home server transfers the license to the target device. In this case, it is also regarded that the first issuing device is a requesting device which request the home server to transfer the license.

Especially, in the case of single transfer or repeated transfer, each transfer may be an independent operation, or the complete process of the previous transfer includes subsequent transfers, namely, the previous transfer is completed upon completion of the subsequent transfers. For example, when device 0 requests RI-0 to transfer an RO to device 1, the RI-0 transfers the RO to the RI-1 first, and then the RI-1 transfers the RO to device 1 finally. That is, a complete implementation process may include repeated transfers. If each transfer is performed independently, device 0 and RI-0 perform transfer interaction, without concerning about subsequent transfers. If the complete process of the previous transfer includes subsequent transfers, device 0 sends a transfer request to the RI-0, and the transfer session is completed upon completion of subsequent transfers.

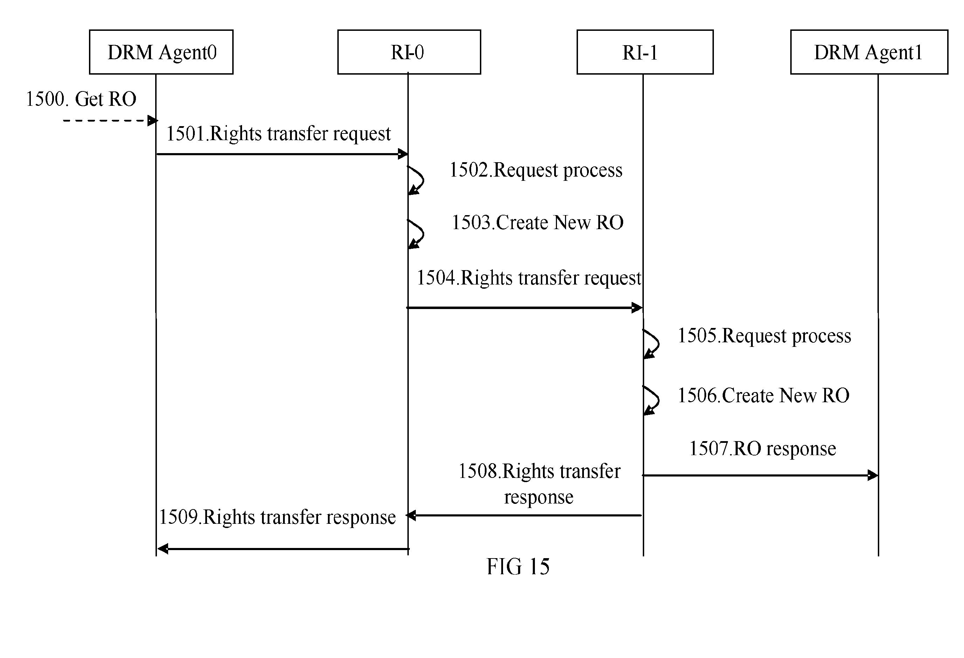

Figure 15 shows a detailed instance:
Assumption: The DRM Agent0 requests the RI-0 to transfer the RO to the DRM Agent1; after receiving the request, the RI-0 finds out that the home server of the destination device is RI-1 according to a home server matching table, and requests the RI-1 to transfer the RO to the DRM Agent1; after transferring the RO to DRM Agent1, the RI-1 responds to the RI-0; after receiving the response, the RI-0 returns a response to the DRM Agent0. The transfer session process is ended.

Step 1500: The DRM Agent0 currently owns an RO (RO-1).

Step 1501: The DRM Agent0 requests the RI-0 to transfer the RO to the DRM Agent1.

Steps 1502-1503: After receiving the request, the RI-0 authenticates legality of the request (including the RO), extracts the transferred rights and the CEK, re-encapsulates the RO, and generates an RO-2.

Step 1504: The RI-0 requests the RI-1 to transfer the RO-2 to the DRM Agent1. Table 11 shows an instance defined by the parameters of the Rights transfer request:

**Table 11 Rights transfer request**

| Parameters | Description |
|---|---|
| RI-0 | ID of the requesting device |
| RI-1 | ID of the transfer device |
| DRM Agent 1 | ID of the device that receives the transferred RO |
| RO-2 | Transferred RO |

Steps 1505-1506: After receiving the request, the RI-1 performs the relevant authentication and re-encapsulation processes.

Step 1507: The RI-1 transfers the encapsulated RO to the DRM Agent1.

Step 1508: The RI-1 returns a response to the RI-0, notifying that the transfer request is finished.

Step 1509: After receiving the response about completion of the transfer request from the RI-1, the RI-0 returns a response to the DRM Agent0, notifying the DRM Agent0 about completion of the transfer request. The session is completed.

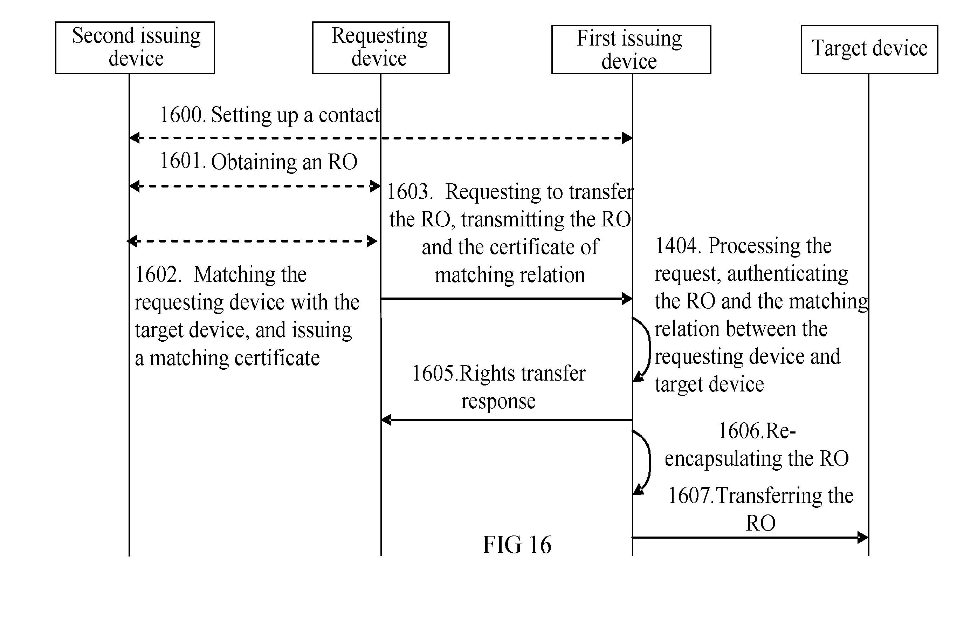

In embodiments of the present invention, after a relationship (for example, trust relation between both parties) is set up between the second issuing device and the first issuing device, the license issued by the second issuing device may be transferred between any two devices supported by the first issuing device by means of the first issuing device. Further, to be on the safe side, the first issuing device (for example, the license importing device in the OMA SCE1.0 standard, logically including LRM or DEA) requires that a matching relation specified by the first issuing device must exist between both the license sending device and the license receiving device before the license can be transferred. As shown in Figure 16, the process includes the following steps:
Step 1600: Like the operations in step 800, the first issuing device sets up a relationship with the second issuing device, for example, through a registration protocol.
Step 1601: The requesting device obtains the license issued by the second issuing device.
Step 1602: The second issuing device interacts with the requesting device, matches the requesting device with the target device, and issues a certificate to the requesting device to prove that a matching relation exists between the requesting device and target device. The certificate includes a requesting device ID, a target device ID, and a signature created by the second issuing device for the certificate.
Step 1603: Like the operations in step 802, the requesting device sends to the first issuing device a request of transferring a license issued by the second issuing device. Besides, the requesting device sends the certificate, which is issued by the second issuing device for proving the matching relation between the requesting device and target device, to the first issuing device. The certificate may be sent together with the rights transfer request, or sent before the rights transfer request, or sent after the rights transfer request.
Step 1604: Like the operations in step 803, the first issuing device handles the request after receiving the request. The first issuing device not only authenticates the license to be transferred, but also authenticates the certificate about the matching relation between the requesting device and target device, where the certificate is issued by the second issuing device and sent by the requesting device. The authentication covers: checking signature created by the second issuing device for the matching relation, checking whether the requesting device in the matching relation certificate is the device which send the request, and checking whether the receiving device in the matching relation certificate is the target device of the request. If the authentication succeeds, the transfer is allowed; otherwise, the transfer is not allowed.
Steps 1605-1607: Like the operations in steps 804-806, the first issuing device returns a response to the requesting device. The response carries status information about success or failure of the authentication. If the authentication succeeds, the first issuing device transfers to the target device the license provided by the requesting device.

In the foregoing embodiment, the second issuing device may further specify licenses involved by the matching relation certificate. In this case, a license ID list may be added in the matching relation certification mentioned in step 1602, and in step 1604 additionally the first issuing device verifies whether the ID of the license to be transferred exists in the license ID list of the matching relation certificate.

Given below is an example of the format of a matching relation certificate:

```
matching relation certificate
            {
                ID of the requesting device
                ID of the target device
                list of license IDs
            }
```

signature for the foregoing data, created by the device which grants the matching relation (the second issuing device).

Accordingly, in an embodiment of the present invention, if the license issuing device is used as the first issuing device in the foregoing embodiment, the license issuing device may further include a matching relation authenticating module, adapted to authenticate the matching relation certificate between the requesting device and the target device after receiving the rights transfer request. If the license issuing device is used as the second issuing device in the foregoing embodiment, the license issuing device may further include a matching relation granting module, adapted to issue a certificate of a matching relation between the device obtaining the license and the target device to the device obtaining the license.

It is understandable to those skilled in the art that all or partial steps of the foregoing embodiments may be implemented by hardware instructed by a program. The program may be stored in a computer-readable storage medium such as Read-Only Memory (ROM), Random Access Memory (RAM), magnetic disk and compact disk.

In the method of transferring a license in an embodiment of the present invention, the first issuing device receives a request of transferring the license issued by the second issuing device; the first issuing device transfers the license after determining that a relationship is set up with the second issuing device. Therefore, one issuing device may transfer the license issued by other issuing devices, the flexibility of transferring licenses is improved greatly, and favorable consumption experience is brought to consumers. Further, in the case of transferring a license, a process of encapsulating and authenticating the license is introduced. Therefore, illegal transfer and dissemination of licenses are prevented, and the interest of the rights consumer and rights issuer is protected.

It is apparent that those skilled in the art can make various modifications and variations to the present invention without departing from the scope of the present invention. The present invention is intended to cover such modifications and variations provided that they fall in the scope of protection defined by the following claims or their equivalents.

## Claims

1. A method for transferring licenses, comprising:
receiving, by a first issuing device, a request of transferring a license issued by a second issuing device; and
transferring, by the first issuing device, the license after determining that a relationship is set up with the second issuing device.

2. The method of claim 1, further comprises:
obtaining, by the first issuing device, the license from a device which sends the request and providing the license through the request; or
obtaining, by the first issuing device, the license from the second issuing device.

3. The method of claim 2, wherein:
the first issuing device authenticates a digital signature in the license after obtaining the license .

4. The method of claim 3, wherein:
the first issuing device rejects the request of transferring the license if one of multiple digital signatures in the license is authenticated unsuccessfully.

5. The method of claim 3, wherein:
the digital signature of the first issuing device is carried in the transferred license after the first issuing device authenticates the digital signature successfully.

6. The method of claim 5, wherein:
the first issuing device reserves all digital signatures in the license and adds the digital signature of the first issuing device; or
the first issuing device reserves the digital signature of the second issuing device in the license and adds the digital signature of the first issuing device, and discards the digital signatures of other issuing devices; or
the first issuing device discards all digital signatures in the license and adds the digital signature of the first issuing device; or
the first issuing device reserves the digital signature of an initial issuing device in the license and adds the digital signature of the first issuing device, and discards the digital signatures of other issuing devices.

7. The method of claim 1 or claim 2, wherein:
after receiving the request, the first issuing device re-encapsulates the license and then transfers it.

8. The method of claim 7, wherein:
if the license is stateful, the device which sends the request provides state information of the license for the first issuing device, and the first issuing device re-encapsulates the license according to the license and the state information.

9. The method of claim 7, wherein:
the first issuing device re-encapsulates the license according to at least one of Rights Encryption Key (REK), Content Encryption Key (CEK), license ID, and ID of an license issuing device, or any combination thereof, provided by the device which sends the request.

10. The method of claim 1, wherein:
the first issuing device sets up the relationship with the second issuing device before receiving the request, and the setup of the relationship between the first issuing device and the second issuing device is triggered by the first issuing device, the second issuing device, or the device which sends the request.

11. The method of claim 1, wherein:
the device which sends the request sends the request to the first issuing device according to an ID of the first issuing device carried in the license.

12. The method of claim 1, wherein:
the first issuing device sets up the relationship with the second issuing device after receiving the request, and the setup of the relationship between the first issuing device and the second issuing device is triggered by the device which sends the request.

13. The method of claim 10 or claim 12, wherein:
the process in which the setup of the relationship between the first issuing device and the second issuing device is triggered by the device which sends the request comprises:
setting up, by the first issuing device, the relationship with the second issuing device according to an ID of the second issuing device provided by the device which sends the request; or
setting up, by the second issuing device, the relationship with the first issuing device according to the ID of the first issuing device provided by the device which sends the request.

14. The method of claim 1, wherein:
after the relationship is set up between the first issuing device and the second issuing device, the first issuing device or the second issuing device record at least one of device identifier information, a validity period, a device certificate, and a device public key of the opposite party, or any combination thereof.

15. The method of claim 14, wherein:
the first issuing device compares the ID of the second issuing device carried in the license with a locally record about issuing devices which have currently set up the relationship with the first issuing device, and determines whether the relationship has been set up with the second issuing device according to a comparison result.

16. The method of claim 1, wherein:
the request carries an ID of a target device, and the first issuing device transfers the license to the target device according to the ID of the target device after determining that the relationship has been set up with the second issuing device.

17. The method of claim 1, wherein:
after determining that the relationship has been set up with the second issuing device, the first issuing device further determines whether the first issuing device is a home server to the target device; if yes, the first issuing device transfers the license to the target device directly; otherwise, the first issuing device transfers the license to a home server of the target device, and the home server of the target device transfers the license to the target device.

18. The method of claim 1, wherein:
the second issuing device or the first issuing device is a Rights Issuers or an importing devices.

19. The method of claim 1, wherein:
the second issuing device is the device which sends the request.

20. The method of claim 1, wherein:
the first issuing device further receives a matching relation certificate which is issued by the second issuing device for proving a matching relation between a requesting device and a receiving device; and the first issuing device transfers the license after authenticating the matching relation certificate successfully.

21. The method of claim 20, wherein the process of authenticating the matching relation certificate comprises:
checking a signature created by the second issuing device for the matching relation;
checking whether the requesting device in the matching relation certificate is the device which sends the request; and
checking whether the receiving device in the matching relation certificate is the target device of the request.

22. The method of claim 21, wherein the process of authenticating the matching relation certificate further comprises:
checking whether the ID of the license to be transferred exists in a license ID list of the matching relation certificate.

23. An issuing device, comprising:
a receiving module (300), adapted to receive a request of transferring a license issued by another issuing device;
a setup module (301), adapted to set up a relationship with the other issuing device;
a determining module (302), adapted to: determine whether this issuing device has set up the relationship with the other issuing device according to the request, and, if no relationship has been set up, control the setup module (301) to set up the relationship with the other issuing device; and
a sending module (303), adapted to transfer the license after this issuing device has set up the relationship with the other issuing device.

24. The issuing device of claim 23, further comprising:
an authenticating module (304), adapted to authenticate a digital signature in the license after the receiving module (300) receives the license; or
an encapsulating module (305), adapted to re-encapsulate the license before the sending module (303) transfers the license.

25. The issuing device of claim 23, further comprising:
a matching relation authenticating module, adapted to authenticate a certificate of a matching relation between a device which requests to transfer the license and a target device after receiving the request; or
a matching relation granting module, adapted to issue a certificate of a matching relation between the device obtaining the license and the target device to the device obtaining the license.

26. A communication system, comprising:
a first issuing device (200) and a second issuing device (201), adapted to issue and transfer a license; and
a device requesting to transfer the license (202), adapted to request the first issuing device (200) to transfer the license issued by the second issuing device (201), wherein:
the first issuing device (200) transfers the license after determining that a relationship is set up with the second issuing device (201).
